# EUROPÄISCHE PATENTSCHRIFT

(11) **EP 2 570 779 B1**
(45) Veröffentlichungstag und Bekanntmachung des Hinweises auf die Patenterteilung: **12.03.2014**
(21) Anmeldenummer: 12171913.2
(22) Anmeldetag: 14.06.2012
(51) Int. Cl.: G01D 5/347, G01D 5/244

(54) **Montagevorrichtung eines Längenmesssystems**
Mounting device of a length measurement system
Dispositif de montage d'un système de mesure de la longueur

(30) Priorität: 15.09.2011 DE 102011082755
(43) Veröffentlichungstag der Anmeldung: 20.03.2013
(73) Patentinhaber: Dr. Johannes Heidenhain GmbH, 83301 Traunreut (DE)
(72) Erfinder: Schenk, Oliver, Dr., 83349 Palling (DE); Nutzinger, Tarek, 83377 Vachendorf (DE)

(56) Entgegenhaltungen:
- EP-B1- 0 118 607
- WO-A1-85/05544
- DE-A1-102005 027 025
- DE-C2- 3 302 643
- JP-A- 8 201 020

## Beschreibung

Die Erfindung betrifft eine Montagevorrichtung zum Anbringen eines Längenmesssystems an ein Maschinenteil, insbesondere an eine Werkzeugmaschine.

Eine derartige Montagevorrichtung in Form einer Montageschiene ist in der EP 0 185 072 B1 beschrieben. Die Montageschiene umfasst eine Wandung sowie einen unteren und oberen Vorsprung, wobei der Raum zwischen den beiden Vorsprüngen zur Aufnahme eines Maßstabgehäuses dient. Der untere Vorsprung dient als Gegenhalter, an dem sich das Maßstabgehäuse abstützt. Im oberen Vorsprung sind mehrere Schrauben in Form von Druckschrauben eingeschraubt, welche auf eine abgeschrägte Fläche des Maßstabgehäuses drücken und dieses somit einerseits an die Wandung sowie andererseits an den unteren Vorsprung der Montageschiene drängen,

Eine weitere Montagevorrichtung zum Anbringen eines Längenmesssystems an ein Maschinenteil ist in der DE 10 2005 027 025 A1 beschrieben. Die Halterung eines Maßstabs erfolgt dabei durch Klemmen an einem Trägerkörper.

Der Erfindung liegt die Aufgabe zugrunde, eine Montagevorrichtung minimaler Baugröße anzugeben, mit der ein Längenmesssystem möglichst stabil gehalten werden kann.

Diese Aufgabe wird durch eine Montagevorrichtung gemäß dem Anspruch 1 gelöst.

In vorteilhafter Weise weist der Halter einen ersten Abschnitt auf, wobei der erste Abschnitt des Halters mit dem Längenmesssystem in Eingriff bringbar ist, und einen zweiten Abschnitt auf, der dazu ausgebildet ist, um den Halter an der zumindest einen Führungsfläche des Grundkörpers verdrehsicher in Richtung des Gegenhalters längs zu führen. Dabei kann der erste Abschnitt des Halters zumindest einen nasenförmigen Vorsprung aufweisen, der dazu ausgebildet ist, bei dem Eingriff in das Längenmesssystem eine Materialverdrängung zu bewirken.

In vorteilhafter Weise weist die Ausnehmung zwei zueinander parallel verlaufende Führungsflächen auf, welche den Halter in Messrichtung fesseln.

Der Gegenhalter ist vorzugsweise ein an dem Grundkörper angeformter Vorsprung.

Das Verstellelement zur Verlagerung des Halters am Grundkörper ist bevorzugt eine Schraube, die in ein Innengewinde des Halters eingreift.

Dabei kann die Schraube beidseitig antreibbar ausgebildet sein, indem diese an beiden Enden ein Profil für einen Schraubendreher aufweist.

Der Halter weist vorzugsweise einen Haken auf, mit dem er mit dem Grundkörper einen Formschluss bildet.

Der Grundkörper ist in bevorzugter Ausgestaltung eine in Messrichtung verlaufende Montageschiene, an der mehrere in Messrichtung voneinander beabstandete Ausnehmungen zur verdrehsicheren Führung jeweils eines Halters vorgesehen sind.

Zum Halten des Maßstabgehäuses kann ein einziger Halter an dem Grundkörper ausreichen. Für längere Maßstabgehäuse können mehrere Halter in Längsrichtung voneinander beabstandet an dem als Montageschiene ausgebildeten Grundkörper vorgesehen sein, oder alternativ mehrere Grundkörper mit jeweils zumindest einem Halter in Längsrichtung aufeinander folgend angeordnet werden.

Insbesondere weist die Montagevorrichtung als Grundkörper eine Montageschiene auf, die einerseits dazu ausgebildet ist, ein Maßstabgehäuse daran zu befestigen und andererseits dazu ausgebildet ist, diese an einem Maschinenteil zu montieren. Die Montageschiene weist hierzu einen Haltemechanismus auf, der zumindest einen mittels eines Verstellelementes in Richtung eines Gegenhalters verlagerbaren Halter umfasst, wobei durch Verschieben des Halters das Maßstabgehäuse zwischen dem Gegenhalter und dem Halter an der Montageschiene befestigbar ist. Die ortsfeste Befestigung des Maßstabgehäuses an der Montageschiene erfolgt durch eine Klemmkraft, die durch Verschieben des Halters eingeleitet wird. Der Halter ist dazu ausgebildet, um mit dem Maßstabgehäuse in Eingriff gebracht zu werden, damit die vom Halter ausgehende Kraft am Maßstabgehäuse angreifen kann. Zur Verschiebung des Halters weist die Montageschiene eine Ausnehmung auf, die dazu ausgebildet ist, um den Halter darin verdrehsicher zu halten und in Richtung des Gegenhalters längs zu führen.

Der Erfindung liegt weiterhin die Aufgabe zugrunde eine Baueinheit mit einer Montagevorrichtung und einem montierten Längenmesssystem anzugeben.

Diese Aufgabe wird durch eine im Anspruch 10 angegebene Baueinheit gelöst.

Die Erfindung wird anhand eines Ausführungsbeispiels näher erläutert.

Dabei zeigt
- Figur 1: eine perspektivische Ansicht einer Montageschiene und eines Maßstabgehäuses beim Anbau;
- Figur 2: einen Querschnitt der Montageschiene;
- Figur 3: einen Querschnitt der Montageschiene mit angebautem Maßstabgehäuse;
- Figur 4: den Querschnitt der Montageschiene gemäß Figur 3 im an ein Maschinenteil angebauten Zustand;
- Figur 5: einen Halter der Montageschiene in perspektivischer Ansicht und
- Figur 6: einen Schnitt des Halters.

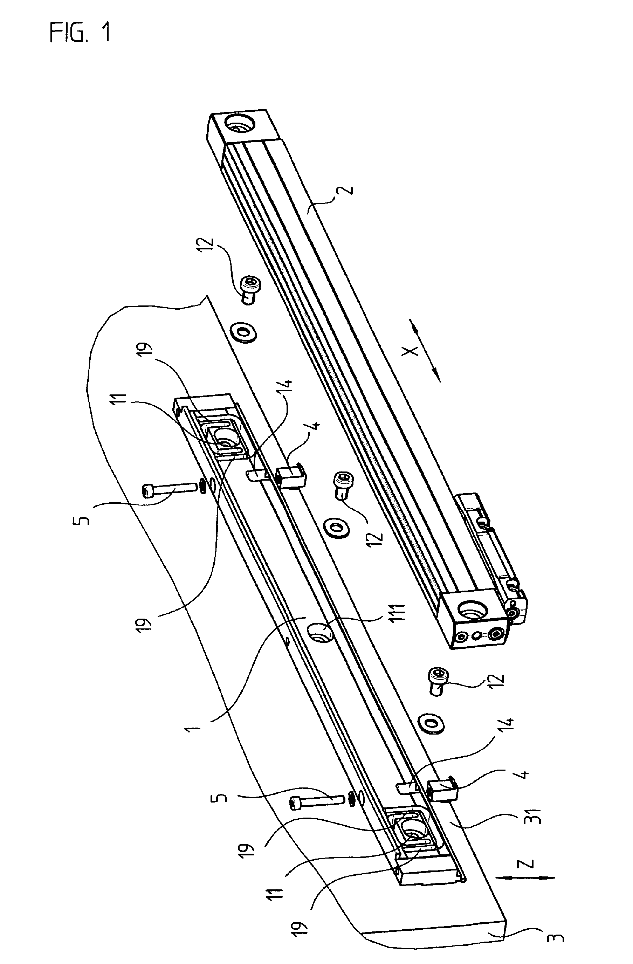

Die Figur 1 zeigt eine perspektivische Explosionszeichnung einer Montageschiene 1 und eines Maßstabgehäuses 2 beim Zusammenbau. Die Montageschiene 1 dient zur Montage des Maßstabgehäuses 2 an ein Maschinenteil 3. Hierzu weist die Montageschiene 1 einerseits Mittel auf, um diese an eine Anbaufläche 31 des Maschinenteils 3 anzuschrauben. Diese Mittel sind Bohrungen 11, 111 in der Montageschiene 1 und Befestigungsschrauben 12 zum Einschrauben in das Maschinenteil 3. Die Bohrung 111 ist dazu ausgelegt, um einen Fixpunkt der Montageschiene 1, auch Bezugspunkt genannt, mit dem Maschinenteil 3 zu schaffen. Die Bohrungen 11 sind dazu ausgelegt, die Montageschiene 1 an diesen Befestigungsstellen in Messrichtung X beweglich an das Maschinenteil 3 anzubauen. Hierzu sind die Bereiche der Befestigungsbohrungen 11 mit der übrigen Montageschiene 1 über Ausgleichselemente, hier ausgebildet als in Messrichtung X durch Biegung auslenkbare Festkörpergelenke 19, verbunden. Durch das Vorsehen von Ausgleichselementen ist gewährleistet, dass unterschiedliche thermische Ausdehnungen der Montageschiene 1 gegenüber dem Maschinenteil 3 ausgeglichen werden und keine Verbiegung der Montageschiene 1 verursachen.

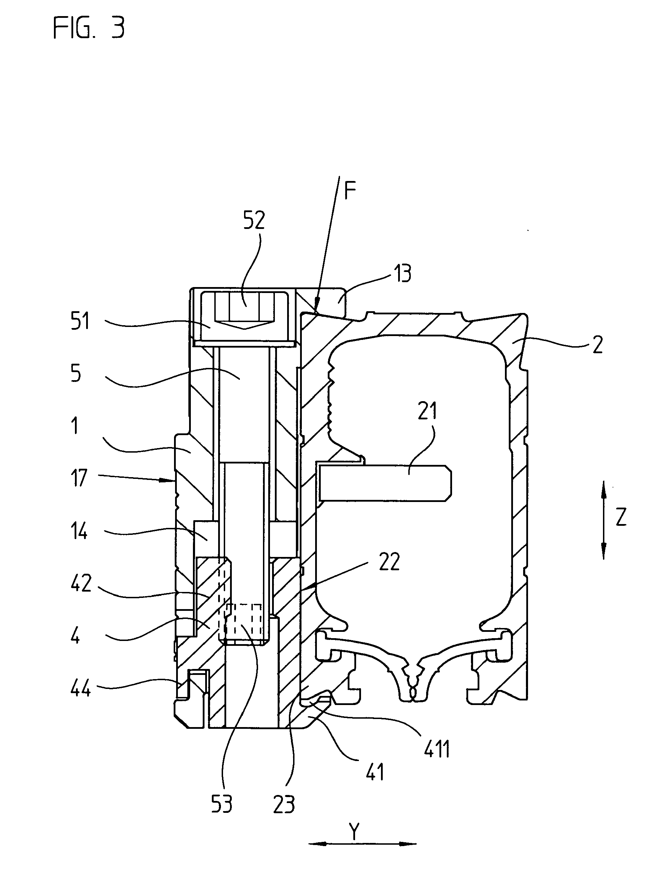

Darüber hinaus weist die Montageschiene 1 einen Haltemechanismus auf, um das Maßstabgehäuse 2 an der Montageschiene 1 zu haltern. Dieser Haltemechanismus ist dazu ausgelegt, um das Maßstabgehäuse 2 in der in Figur 3 gezeigten Weise an die Montageschiene 1 einzuhängen. Der Haltemechanismus der Montageschiene 1 umfasst zumindest einen Halter 4, im Ausführungsbeispiel zwei in Messrichtung X voneinander beabstandete Halter 4. Die Halter 4 sind jeweils mittels eines Verstellelementes 5 in Richtung eines Gegenhalters 13 der Montageschiene 1 verlagerbar. Diese Verlagerung erfolgt in einer Richtung Z, die senkrecht zur Messrichtung X verläuft. Das Maßstabgehäuse 2 wird durch diese Verschiebung der Halter 4 zwischen dem Gegenhalter 13 und den Haltern 4 durch Klemmen an der Montageschiene 1 befestigt.

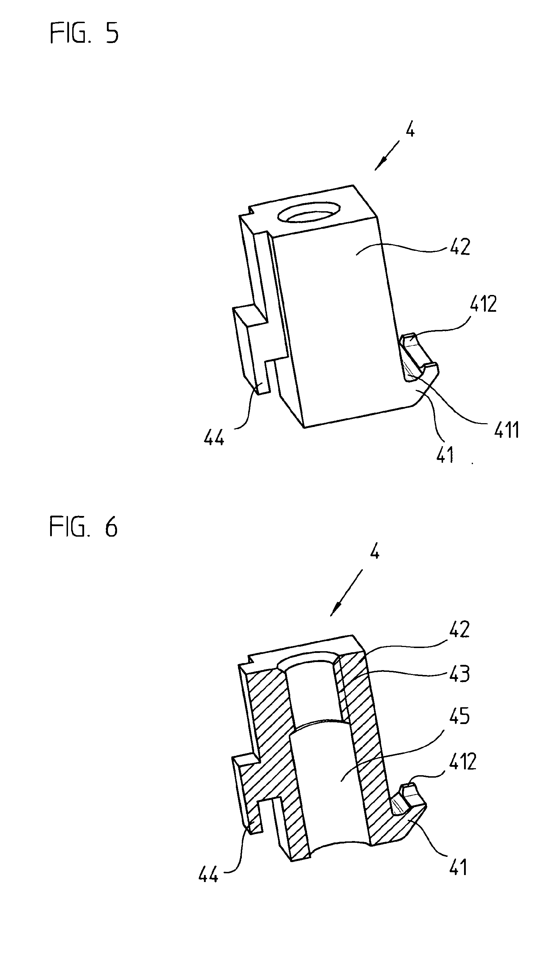

Die Halter 4 sind in den Figuren 5 und 6 vergrößert dargestellt. Sie weisen jeweils einen ersten Abschnitt 41 und einen zweiten Abschnitt 42 auf. Der erste Abschnitt 41 ist dazu ausgelegt um in das Maßstabgehäuse 2 einzugreifen und ist als ein aus der Wandung 16 hervorragender Vorsprung, insbesondere als hakenförmiger Vorsprung mit einer nutförmigen Aufnahme 411, ausgebildet. In die nutförmige Aufnahme 411 greift formschlüssig ein Vorsprung 23 des Maßstabgehäuses 2 ein. Der erste Abschnitt 41 des Halters 4 bildet eine Art Einhakvorrichtung für das Maßstabgehäuse 2, in die das Maßstabgehäuse 2 formschlüssig einhakbar ist und dieses nach unten (Z-Richtung) abstützt.

An dem ersten Abschnitt 41 des Halters 4 ist zumindest ein nasenförmiger Vorsprung 412 vorgesehen, der dazu ausgebildet ist, in das Material des Maßstabgehäuses 2 einzudringen, also eine Materialverdrängung zu erreichen. Besteht das Maßstabgehäuse 2 aus Aluminium, so ist die Außenfläche eloxiert und elektrisch isolierend. Der nasenförmige Vorsprung 412 durchstößt die Eloxalschicht dieser Oberfläche und stellt eine elektrisch leitende Verbindung zwischen dem Maßstabgehäuse 2 und dem Halter 4 her. Weiterhin bildet der in das Maßstabgehäuse 2 eindringende Vorsprung 412 einen in Messrichtung X wirkenden Formschluss zwischen dem Maßstabgehäuse 2 und dem Halter 4.

Der zweite Abschnitt 42 ist in einer Ausnehmung 14 der Montageschiene 1 in Z-Richtung geführt, wobei die Ausnehmung 14 und der zweite Abschnitt 42 des Halters 4 derart ausgebildet sind, dass der Halter 4 verdrehgesichert in der Montageschiene 1 in Richtung des Gegenhalters 13 verschiebbar ist. In vorteilhafter Weise weist der Halter 4 eine rechteckförmige Außenkontur auf, wobei der zweite Abschnitt 42 zwei parallel zueinander verlaufende Seitenflächen umfasst und die Ausnehmung 14 parallel dazu verlaufende Seitenflächen, die Führungsflächen und einen in Messrichtung X wirkenden Formschluss für die beiden Seitenflächen des Halters 4 bilden. Dieser Formschluss bildet die Verdrehsicherung und fesselt den Halter 4 in Messrichtung X. Der Halter 4 mit den beiden Abschnitten 41 und 42 ist einstückig, insbesondere als einstückiges Frästeil ausgebildet und somit kostengünstig herstellbar und besonders stabil.

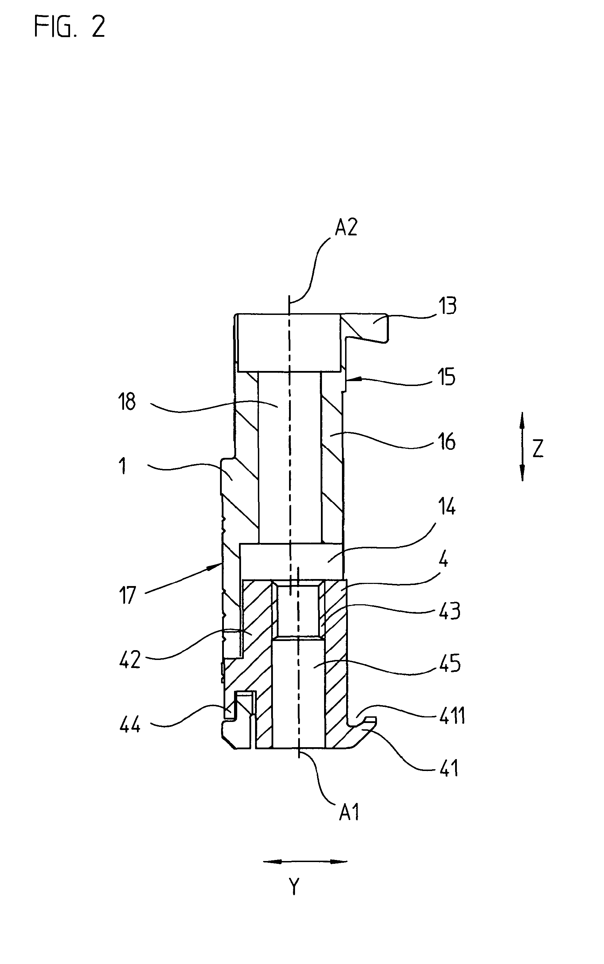

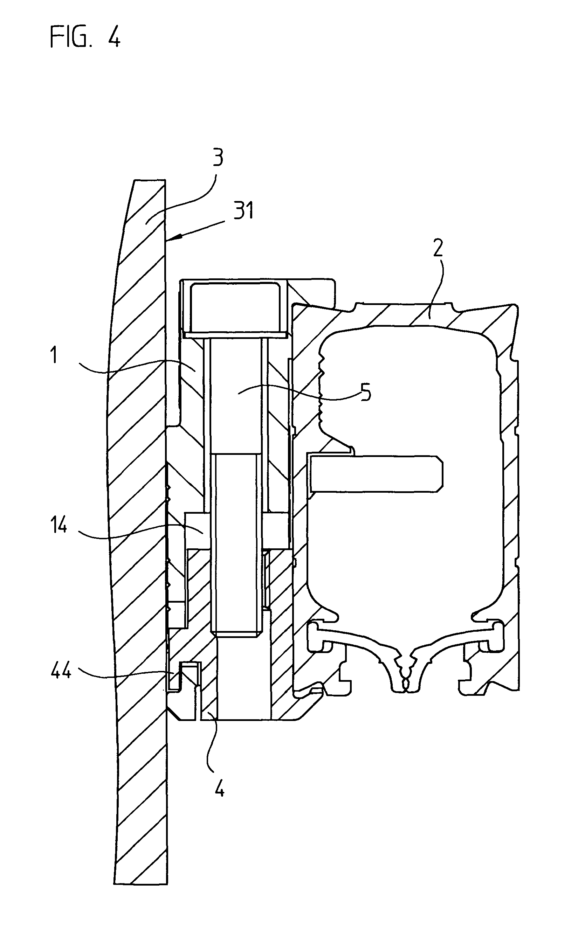

Figur 2 zeigt einen Querschnitt der Montageschiene 1 im Bereich eines der Halter 4 ohne Maßstabgehäuse 2. Figur 3 den gleichen Querschnitt mit dem an der Montageschiene 1 befestigten Maßstabgehäuse 2 und Figur 4 den gleichen Querschnitt der Montageschiene 1 in einem Zustand, in dem diese mit dem daran befestigten Maßstabgehäuse 2 an ein Maschinenteil 3 angebaut ist. In diesen Querschnitten ist ersichtlich, dass die die Führung für den Halter 4 bildende Ausnehmung 14 in einer Wandung 16 der Montageschiene 1 angeordnet ist und zwar in einem Bereich zwischen der Rückseite 22 des Maßstabgehäuses 2 und der rückseitigen Anbaufläche 17 der Montageschiene 1, die beim Anbau an das Maschinenteil 3 mit dieser in Kontakt gebracht wird. Der zweite Abschnitt 42 des Halters 4 ist somit besonders platzsparend untergebracht und stabil an der Montageschiene 1 geführt.

Der Gegenhalter 13 ist ein an die Wandung 16 der Montageschiene 1 einstückig angeformter Vorsprung mit einer Andruckfläche, die mit einer Fläche des Maßstabgehäuses 2 derart korrespondiert, dass eine Andruckkraft F mit einer Komponente in Richtung der inneren Anbaufläche 15 der Montageschiene 1 und einer Komponente in Richtung des Maßstabgehäuses 2 resultiert.

Bei an die Montageschiene 1 montiertem Maßstabgehäuse 2 liegt das Maßstabgehäuse 2 mit seiner Rückseite 22 an der Montageschiene 1 an und die Ausnehmung 14 mit dem darin geführten zweiten Abschnitt 42 des Halters 4 verläuft in der Wandung 16 der Montageschiene 1 zwischen der Anbaufläche 31 und dem Maßstabgehäuse 2. Das Verstellelement 5 und der geführte zweite Abschnitt 42 des Halters 4 sind in der Wandung 16 der Montageschiene 1 platzsparend hinter dem die Montageschiene 1 bildenden Aufnahmeraum für das Maßstabgehäuse 2 untergebracht. Wobei der Aufnahmeraum der Raum zwischen dem Gegenhalter 13 und dem ersten Abschnitt 41 des Halters 4 ist.

Der Halter 4 ist mittels des Verstellelementes 5 in Richtung des Gegenhalters 13 verlagerbar. Das Verstellelement ist eine Schraube 5, die in eine Bohrung 18 der Montageschiene 1 eingeführt ist und die sich mittels eines Schraubenkopfes 51 an der Montageschiene 1 abstützt. Der Halter 4 weist ein Innengewinde 43 auf, in das die Schraube 5 einschraubbar ist.

Der Halter 4 weist eine Durchgangsöffnung 45 auf. Die Schraube 5 ist in vorteilhafter Weise derart ausgebildet, dass sie an beiden Enden mittels eines Betätigungswerkzeugs drehbar ist. Hierzu weist die Schraube 5 an beiden Enden jeweils ein Profil auf, an dem ein Schraubendreher ansetzbar ist und ein Drehmoment einleitbar ist. Die Profile sind Innenprofile, wie Innensechskant für einen Inbus-Schraubendreher und/oder Innensechsrund für einen Torx-Schraubendreher. Im gezeigten Beispiel weist der Schraubenkopf 51 der Schraube 5 einen Innensechskant 52 und das andere Ende einen Innensechsrund 53 auf. Der Innensechsrund 53 reicht in die Durchgangsbohrung 45 ist somit von außen mit einem Torx-Schraubendreher zugänglich und betätigbar.

Die Mittelachse A1 des Innengewindes 43 des Halters 4 ist bei in die Montageschiene 1 eingehängtem Maßstabgehäuse 2, aber noch nicht eingesetzter Schraube 5 in Y-Richtung hin zur Anbaufläche 15 gegenüber der Mittelachse A2 der Bohrung 18 der Montageschiene 1 versetzt. Beim Eindrehen der Schraube 5 in das Innengewinde 43 wird eine Vorspannung des Halters 4 in Y-Richtung eingeleitet, welche beim Einschrauben der Schraube 5 dieses in Richtung der inneren Anbaufläche 15 der Montageschiene 1 drängt. Der Versatz der beiden Mittelachsen A1, A2 liegt in einem Bereich von 0,4 bis 1,0 mm.

Der Halter 4 weist rückseitig einen Haken 44 auf, der hinter die Wandung 16 der Montageschiene 1 eingreift und sich an der Wandung 16 derart abstützt, dass eine Verlagerung des Halters 4 in Y-Richtung (in den Figuren 2 bis 4 nach rechts), also eine Verlagerung des Maßstabgehäuses 2 weg von der Anbaufläche 15, verhindert wird. Der Haken 44 bildet somit mit der Wandung 16 der Montageschiene 1 einen Umgriff und damit einen Formschluss, der eine Kippbewegung in Richtung Y verhindert, also einen Formschluss in einer Richtung bewirkt, die senkrecht zur Messrichtung X und senkrecht zur Richtung Z verläuft.

Der hinter die Wandung 16 greifende Haken 44 fungiert auch als Verliersicherung für den Halter 4 in einem Zustand, in dem die Schraube 5 nicht in das Innengewinde 43 eingeschraubt ist, also in der in Figur 2 dargestellten Position. Die in Z-Richtung nach unten wirkende Schwerkraft des Halters 4 sichert die Lage des Halters 4 an der Montageschiene 1. Wie in Figur 4 ersichtlich ist, ist der Haken 44 im angebauten Zustand zwischen der Anbaufläche 31 und eines Bereiches der Wandung 16 der Montageschiene 2 positioniert und bildet somit eine Art Umgriff.

Das Maßstabgehäuse 2 weist in seinem Innenraum einen Maßstab 21 auf, der in bekannter Weise bei der Positionsmessung von einer relativ zum Maßstab 21 in Messrichtung X bewegbaren Abtasteinheit abgastet wird.

Ist eine hochgenaue Positionsmessung gewünscht, wird eine Messteilung des Maßstabs 21 lichtelektrisch abtastbar ausgestaltet. Die Messteilung kann alternativ auch magnetisch, kapazitiv oder induktiv abtastbar ausgestaltet sein.

## Patentansprüche

1. Montagevorrichtung zum Anbau eines in einer Messrichtung (X) erstreckten Längenmesssystems (2), wobei das Längenmesssystem (2) zwischen einem Gegenhalter (13) und einem Halter (4) an einem Grundkörper (1) durch Klemmen festlegbar ist, wobei
der Grundkörper (1) und der Halter (4) dazu ausgebildet sind, um den Halter (4) am Grundkörper (1) mittels eines Verstellelementes (5) verdrehsicher in Richtung des Gegenhalters (13) längs zu führen, wozu am Grundkörper (1) zumindest eine Führungsfläche ausgebildet ist und der Grundkörper (1) eine Ausnehmung (14) aufweist, in der der Halter (4) verdrehsicher geführt ist, wobei weiterhin der Grundkörper (1) eine Wandung (16) mit einer inneren Anbaufläche (15) aufweist, an der bei aufgenommenem Längenmesssystem (2) eine Fläche (22) des Längenmesssystems (2) anliegt und in dieser Wandung (16) die Ausnehmung (14) eingebracht ist, so dass der Halter (4) hinter dem Längenmesssystem (2) am Grundkörper (1) verdrehsicher geführt ist.

2. Montagevorrichtung nach Anspruch 1, **dadurch gekennzeichnet, dass** der Halter (4) einen ersten Abschnitt (41) aufweist, wobei der erste Abschnitt (41) des Halters (4) mit dem Längenmesssystem (2) in Eingriff bringbar ist, und
der Halter (4) einen zweiten Abschnitt (42) aufweist, der dazu ausgebildet ist, um den Halter (4) an der zumindest einen Führungsfläche des Grundkörpers (1) verdrehsicher in Richtung des Gegenhalters (13) längs zu führen.

3. Montagevorrichtung nach Anspruch 2, **dadurch gekennzeichnet, dass** der erste Abschnitt (41) des Halters (4) zumindest einen nasenförmigen Vorsprung (412) aufweist, der dazu ausgebildet ist, bei dem Eingriff in das Längenmesssystem (2) eine Materialverdrängung zu bewirken.

4. Montagevorrichtung nach einem der vorhergehenden Ansprüche, **dadurch gekennzeichnet, dass** die Ausnehmung (14) zwei zueinander parallel verlaufende Führungsflächen aufweist, welche den Halter (4) in Messrichtung (X) fesseln.

5. Montagevorrichtung nach einem der vorhergehenden Ansprüche, **dadurch gekennzeichnet, dass** der Gegenhalter (13) ein an dem Grundkörper (1) angeformter Vorsprung ist.

6. Montagevorrichtung nach einem der vorhergehenden Ansprüche, **dadurch gekennzeichnet, dass** das Verstellelement (5) eine Schraube ist, die in ein Innengewinde (43) des Halters (4) eingreift.

7. Montagevorrichtung nach Anspruch 6, **dadurch gekennzeichnet, dass** die Schraube beidseitig antreibbar ist, indem diese an beiden Enden ein Profil (52, 53) für einen Schraubendreher aufweist.

8. Montagevorrichtung nach einem der vorhergehenden Ansprüche, **dadurch gekennzeichnet, dass** der Halter (4) einen Haken (44) aufweist, mit dem er mit dem Grundkörper (1) einen Formschluss bildet.

9. Montagevorrichtung nach einem der vorhergehenden Ansprüche, **dadurch gekennzeichnet, dass** der Grundkörper (1) eine in Messrichtung (X) verlaufende Montageschiene ist, an der mehrere in Messrichtung (X) voneinander beabstandete Halter (4) vorgesehen sind.

10. Baueinheit mit einer Montagevorrichtung nach einem der vorhergehenden Ansprüche und einem daran montierten Längenmesssystem (2).

11. Baueinheit nach Anspruch 10, **dadurch gekennzeichnet, dass** das Längenmesssystem (2) ein Maßstabgehäuse mit einem im Innenraum untergebrachten Maßstab (21) umfasst.

## Claims

1. Mounting device for fitting a length-measuring system (2) which extends in a measuring direction (X), wherein the length-measuring system (2) can be secured on a basic body (1) by clamping between an abutment (13) and a holder (4), wherein
the basic body (1) and the holder (4) are designed so that the holder (4) is guided on the basic body (1) longitudinally, and in a rotationally fixed manner, in the direction of the abutment (13) by means of an adjusting element (5), for which purpose at least one guide surface is formed on the basic body (1) and the basic body (1) has an aperture (14) in which the holder (4) is guided in a rotationally fixed manner, wherein, in addition, the basic body (1) has a wall (16) with an inner fitting surface (15), against which, when the length-measuring system (2) is accommodated in position, a surface (22) of the length-measuring system (2) butts, and the aperture (14) is made in this wall (16), and therefore the holder (4) is guided in a rotationally fixed manner in the basic body (1) behind the length-measuring system (2).

2. Mounting device according to Claim 1, **characterized in that** the holder (4) has a first portion (41), wherein the first portion (41) of the holder (4) can be brought into engagement with the length-measuring system (2), and
the holder (4) has a second portion (42), which is designed so that the holder (4) is guided on the at least one guide surface of the basic body (1) longitudinally, and in a rotationally fixed manner, in the direction of the abutment (13).

3. Mounting device according to Claim 2, **characterized in that** the first portion (41) of the holder (4) has at least one nose-like protrusion (412), which is designed to cause material displacement when it engages in the length-measuring system (2).

4. Mounting device according to one of the preceding claims, **characterized in that** the aperture (14) has two guide surfaces which run parallel to one another and arrest the holder (4) in the measuring direction (X).

5. Mounting device according to one of the preceding claims, **characterized in that** the abutment (13) is a protrusion which is formed on the basic body (1).

6. Mounting device according to one of the preceding claims, **characterized in that** the adjusting element (5) is a screw which engages in an internal thread (43) of the holder (4).

7. Mounting device according to Claim 6, **characterized in that** the screw can be driven on either side, by having a profile (52, 53) for a screwdriver at both ends.

8. Mounting device according to one of the preceding claims, **characterized in that** the holder (4) has a hook (44), by way of which it forms a form fit with the basic body (1).

9. Mounting device according to one of the preceding claims, **characterized in that** the basic body (1) is a mounting rail, which runs in the measuring direction (X) and on which are provided a plurality of holders (4) which are spaced apart from one another in the measuring direction (X).

10. Structural unit having a mounting device according to one of the preceding claims and having a length-measuring system (2) mounted thereon.

11. Structural unit according to Claim 10, **characterized in that** the length-measuring system (2) comprises a measuring-rule housing with a measuring rule (21) accommodated in the interior.

## Revendications

1. Dispositif de montage pour le montage d'un système de mesure de longueur (2) s'étendant dans une direction de mesure (X), le système de mesure de longueur (2) pouvant être fixé par serrage entre un contre-support (13) et un support (4) sur un corps de base (1),
le corps de base (1) et le support (4) étant réalisés de manière à guider le support (4) sur le corps de base (1) longitudinalement au moyen d'un élément de réglage (5) de manière fixée en rotation dans la direction du contre-support (13), au moins une surface de guidage étant réalisée à cet effet sur le corps de base (1), et le corps de base (1) présentant un évidement (14) dans lequel le support (4) est guidé de manière fixée en rotation, le corps de base (1) présentant en outre une paroi (16) avec une surface de montage intérieure (15) contre laquelle s'applique une surface (22) du système de mesure de longueur (2) lorsque le système de mesure de longueur (2) est reçu, et l'évidement (14) étant pratiqué dans cette paroi (16), de telle sorte que le support (4) soit guidé de manière fixée en rotation sur le corps de base (1) derrière le système de mesure de longueur (2).

2. Dispositif de montage selon la revendication 1, **caractérisé en ce que** le support (4) présente une première portion (41), la première portion (41) du support (4) pouvant être amenée en prise avec le système de mesure de longueur (2), et
le support (4) présente une deuxième portion (42) qui est réalisée de manière à guider longitudinalement le support (4) de manière fixée en rotation dans la direction du contre-support (13) au niveau de l'au moins une surface de guidage du corps de base (1).

3. Dispositif de montage selon la revendication 2, **caractérisé en ce que** la première portion (41) du support (4) présente au moins une saillie en forme de nez (412) qui est réalisée de manière à provoquer un déplacement de matériau lors de l'engagement dans le système de mesure de longueur (2).

4. Dispositif de montage selon l'une quelconque des revendications précédentes, **caractérisé en ce que** l'évidement (14) présente deux surfaces de guidage s'étendant parallèlement l'une à l'autre, lesquelles retiennent le support (4) dans la direction de mesure (X).

5. Dispositif de montage selon l'une quelconque des revendications précédentes, **caractérisé en ce que** le contre-support (13) est une saillie façonnée sur le corps de base (1).

6. Dispositif de montage selon l'une quelconque des revendications précédentes, **caractérisé en ce que** l'élément de réglage (5) est une vis qui vient en prise dans un filetage interne (43) du support (4).

7. Dispositif de montage selon la revendication 6, **caractérisé en ce que** la vis peut être entraînée des deux côtés, celle-ci présentant aux deux extrémités un profil (52, 53) pour un tournevis.

8. Dispositif de montage selon l'une quelconque des revendications précédentes, **caractérisé en ce que** le support (4) présente un crochet (44) avec lequel il forme un engagement par correspondance de forme avec le corps de base (1).

9. Dispositif de montage selon l'une quelconque des revendications précédentes, **caractérisé en ce que** le corps de base (1) est un rail de montage s'étendant dans la direction de mesure (X), sur lequel sont prévus plusieurs supports (4) espacés les uns des autres dans la direction de mesure (X).

10. Unité structurelle ccmprenant un dispositif de montage selon l'une quelconque des revendications précédentes et un système de mesure de longueur (2) monté sur celui-ci.

11. Unité structurelle selon la revendication 10, **caractérisée en ce que** le système de mesure de longueur (2) comprend un boîtier de règle graduée avec une règle graduée (21) montée dans l'espace intérieur.
